# EUROPEAN PATENT APPLICATION

(11) **EP 4 192 118 A1**
(43) Date of publication of application: **07.06.2023**
(21) Application number: 21849543.0
(22) Date of filing: 30.07.2021
(51) Int. Cl.: H04W 48/16

(54) **ACCESS CONTROL METHOD, TERMINAL, AND NETWORK SIDE DEVICE**

(30) Priority: 31.07.2020 CN 202010761986
(71) Applicant: Vivo Mobile Communication Co., Ltd., Dongguan, Guangdong 523863 (CN)
(72) Inventor: CHEN, Li, Dongguan, Guangdong 523863 (CN)
(74) Representative: Conti, Marco
(86) International application number: PCT/CN2021/109635
(87) International publication number: WO 2022/022685

(57) **Abstract**

This application discloses an access control method, a terminal, and a network side device. The method includes: obtaining, by a first-type terminal, a first access control parameter, where the first access control parameter is different from a second access control parameter corresponding to a second-type terminal; and performing, by the first-type terminal, access control according to the first access control parameter.

## Description

### CROSS-REFERENCE TO RELATED APPLICATIONS

This application claims priority to Chinese Patent Application No. 202010761986.X, filed on July 31, 2020 in China, which is incorporated herein by reference in its entirety.

### TECHNICAL FIELD

This application pertains to the field of communications technologies, and specifically relates to an access control method, a terminal, and a network side device.

### BACKGROUND

In a current new radio (New Radio, NR) system, user equipment (User Equipment, UE) of different types is not distinguished for access control, and all UE shares a same set of access control information. After a large quantity of light terminals access, access control of normal UE is affected, for example, an access latency is excessively long.

### SUMMARY

Embodiments of this application aim to provide an access control method, a terminal, and a network side device, to resolve a problem in the prior art that all terminals of different types share a same set of access control parameters, which affects access control of a terminal of another type after a large quantity of terminals of a specified type access.

To resolve the foregoing technical problem, this application is implemented as follows:
According to a first aspect, an access control method is provided, including: obtaining, by a first-type terminal, a first access control parameter, where the first access control parameter is different from a second access control parameter corresponding to a second-type terminal; and performing, by the first-type terminal, access control according to the first access control parameter.

According to a second aspect, an access control apparatus is provided, applied to a first-type terminal and including: an obtaining module, configured to obtain a first access control parameter, where the first access control parameter is different from a second access control parameter corresponding to a second-type terminal; and an access control module, configured to perform access control according to the first access control parameter.

According to a third aspect, an access control method is provided, applied to a network side device and including: configuring corresponding access control parameters for terminals of different types.

According to a fourth aspect, an access control apparatus is provided, applied to a network side device and including: a configuration module, configured to configure corresponding access control parameters for terminals of different types.

According to a fifth aspect, a terminal is provided. The terminal includes a processor, a memory, and a program or an instruction that is stored in the memory and that can be run on the processor, where when the program or the instruction is executed by the processor, the steps of the method in the first aspect are implemented.

According to a sixth aspect, a network side device is provided. The network side device includes a processor, a memory, and a program or an instruction that is stored in the memory and that can be run on the processor, where when the program or the instruction is executed by the processor, the steps of the method in the third aspect are implemented.

According to a seventh aspect, a readable storage medium is provided. The readable storage medium stores a program or an instruction, and when the program or the instruction is executed by a processor, the steps of the method in the first aspect or the steps of the method in the third aspect are implemented.

According to an eighth aspect, a chip is provided. The chip includes a processor and a communications interface, the communications interface is coupled to the processor, and the processor is configured to run a program or an instruction of a network side device to implement the method in the first aspect or the method in the third aspect.

In the embodiments of this application, a first-type terminal may obtain a corresponding first access control parameter to perform access control, where the first access control parameter is different from a second access control parameter corresponding to a second-type terminal, that is, terminals of different types may obtain corresponding access control parameters. This resolves a problem in the prior art that all terminals of different types share a same set of access control parameters, affecting access control of a terminal of another type after a large quantity of terminals of a specified type access.

### BRIEF DESCRIPTION OF DRAWINGS

FIG. 1 is a block diagram of a wireless communications system to which embodiments of this application can be applied;
FIG. 2 is a first flowchart of an access control method according to an embodiment of this application;
FIG. 3 is a second flowchart of an access control method according to an embodiment of this application;
FIG. 4 is a first schematic structural diagram of an access control apparatus according to an embodiment of this application;
FIG. 5 is a second schematic structural diagram of an access control apparatus according to an embodiment of this application;
FIG. 6 is a schematic structural diagram of a communications device according to an embodiment of this application;
FIG. 7 is a schematic structural diagram of hardware of a terminal according to an embodiment of this application; and
FIG. 8 is a schematic structural diagram of hardware of a network side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms "first", "second", and the like are intended to distinguish between similar objects but do not describe a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more second objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, the following descriptions describe a new radio (New Radio, NR) system for example purposes, and NR terms are used in most of the following descriptions, although these technologies can also be applied to an application other than an NR system application, for example, a 6th generation (6th Generation, 6G) communications system.

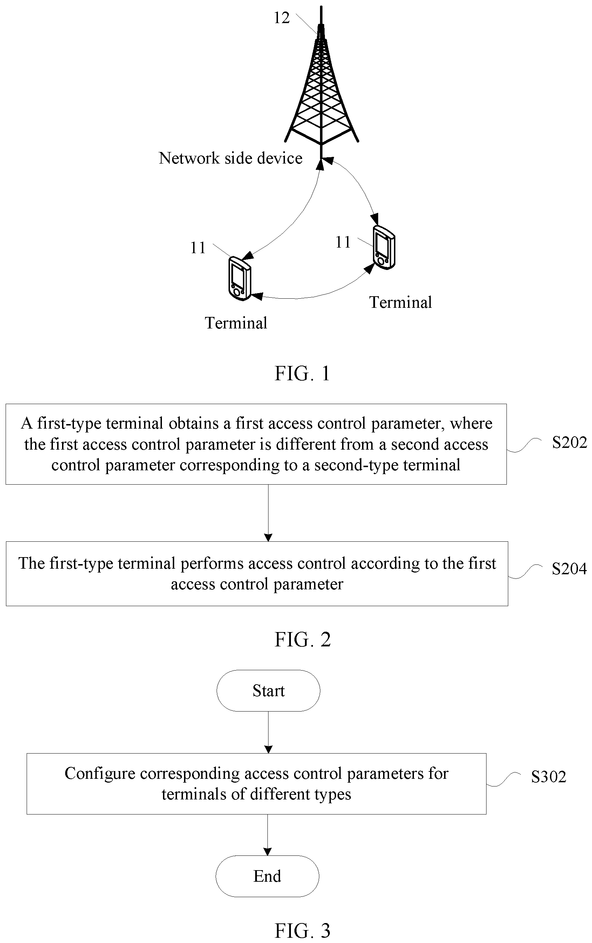

FIG. 1 is a block diagram of a wireless communications system to which embodiments of this application can be applied. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, the access control method provided in the embodiments of this application is described in detail by using specific embodiments and application scenarios.

An embodiment of this application provides an access control method. FIG. 2 is a first flowchart of an access control method according to an embodiment of this application. As shown in FIG. 2, the method includes the following steps:
Step S202: A first-type terminal obtains a first access control parameter, where the first access control parameter is different from a second access control parameter corresponding to a second-type terminal.
Step S204: The first-type terminal performs access control according to the first access control parameter.

According to the foregoing step 202 and step 204, first-type terminal may obtain a corresponding first access control parameter to perform access control, where the first access control parameter is different from a second access control parameter corresponding to a second-type terminal, that is, terminals of different types may obtain corresponding access control parameters. This resolves a problem in the prior art that all terminals of different types share a same set of access control parameters, affecting access control of another type of terminal after a large quantity of terminals access.

It should be noted that the first-type terminal in this embodiment of this application is a light terminal, and the second-type terminal is a normal terminal. Further, the normal terminal may be understood as a non-light terminal or a terminal of a normal type defined in Rel15 or Rel16. The light terminal (light/lite UE, reduced capability UE, NR-light/Lite or RedCap UE for short) is mainly applicable to a wearable device (Wearable Device), an industry sensor terminal (Industry Sensor) in a factory environment, or a video surveillance device. This type of terminal is a device with a limited capability such as lower device complexity, a smaller device size, a weaker processing capability, or fewer features that can be supported.

In addition, the first access control parameter and/or the second access control parameter in this embodiment of this application may be configured on a network side or specified in a protocol. Further, the first access control parameter or the second access control parameter in this embodiment of this application may include at least one of the following:
(1) an access control type, for example, unified access control (Unified Access Control, UAC), access class barring (Access Class Barring, ACB), access barring (Access Barring, AB), and application specific congestion control for data communication (Application Specific Congestion Control for Data Communication, ACDC);
(2) public land mobile network information of access control;
(3) an access control probability parameter;
(4) an access control barring factor, for example, AC_BarringFactor;
(5) information about access control duration, for example, barTimer;
(6) access identifier information corresponding to access control, for example, an access ID;
(7) access category information corresponding to access control, for example, an access category;
(8) access control level information, for example, AC_Barring forSpecialAC;
(9) a radio resource control RRC connection establishment cause (RRC establishment Cause);
(10) an access attempt type; and
(11) event information corresponding to access control.

It should be noted that the foregoing only describes the foregoing plurality of cases of the first access control parameter and the second access control parameter. However, in a specific application scenario, because the first access control parameter corresponds to the first-type terminal, and the second access control parameter corresponds to the second-type terminal, the first access control parameter and the second access control parameter are different.

In an optional implementation of this embodiment of this application, a manner in which the first-type terminal performs access control according to the first access control parameter in step S204 includes:
Manner (1): Perform a first target operation in a case that it is determined, according to the first access control parameter, that the first-type terminal is barred from accessing or is not allowed to access or is not supported by a cell in which the first-type terminal is located.

The first target operation includes at least one of the following: not allowing camping on the cell; barring access to the cell or barring access to the cell within a preset time; not accessing the cell; not allowing an access attempt for the cell; and performing cell selection or reselection.

In this manner (1), if the current first-type terminal is in a connected state, and a large quantity of first-type terminals access a network, load balancing of the network may be controlled by using the first access control parameter.

Manner (2): Perform a second target operation in a case that it is determined, according to the access control parameter, that the first-type terminal is allowed to access or is not barred from accessing or is supported by a cell in which the first-type terminal is located.

The second target operation includes at least one of the following: allowing camping on the cell; not barring access to the cell; allowing access to the cell; performing an access attempt for the cell; and not performing cell selection or reselection.

In this manner (2), if the current first-type terminal is in an idle state, random access channel (Random Access Channel, RACH) access initiated by the first-type terminal may be controlled by using the first access control parameter, without conflict with the second-type terminal, thereby reducing an RACH conflict probability.

In an optional implementation of this embodiment of this application, a manner in which the first-type terminal obtains the first access control parameter by in step S202 in this embodiment of this application may include at least one of the following:
(1) The first-type terminal obtains a first access control parameter corresponding to an attribute of the first-type terminal, where the attribute of the first-type terminal includes at least one of a capability (capability) of the first-type terminal, a capability set (capability set) of the first-type terminal, a feature (feature/functionality) of the first-type terminal, a feature set (feature/functionality set) of the first-type terminal, a type of the first-type terminal, a category of the first-type terminal, a use case (use case) of the first-type terminal, and subscription information (subscription information) of the first-type terminal.

It should be noted that the foregoing type of the terminal generally corresponds to a category (type) defined in the protocol, and may be defined according to the feature set or the capability set or different data rates (for example, data rate), for example, cat. 1, cat.2,.... Different types (categories) may also be defined according to the feature set, the capability set, or the different data rates, or for different types, even if a same category may correspond to different types, such as a high-end terminal (high end UE) and a low-end terminal (low end UE). For different use cases (use case), different categories or different types may correspond to different use cases, or terminals of a same type or same category may be in different use cases (use case), for example, a wearable device (wearable device) applied to a personal service and an industry sensor (industrial sensor) applied to an industrial field. For low end UE, a low end wearable device and a low end industry sensor may also be distinguished. The foregoing subscription information is generally subscription information of UE, for example, corresponding subscription information of an operator in a SIM card, and includes at least one of the following: a type of a SIM card, a service type of a SIM card, SIM card tariff information, a priority of a SIM card, or a client level of an operator. Different initial access resources may be configured to correspond to different subscription information.

In a specific use case, the first-type terminal may be a terminal whose bandwidth capability is less than 700 MHz, or whose antenna quantity capability is less than 4/ equal to 2/equal to 1, or whose peak rate capability is less than 700 Mbps, or whose processing latency capability is less than a preset time, or whose supported carrier quantity capability is less than a preset value, or whose transmit power capability is less than a preset value. Certainly, the attribute of the first-type terminal is merely an example for description, and the attribute value of the first-type terminal may be correspondingly set or adjusted according to a requirement. That is, terminals of a same type may further select corresponding initial access resources according to attribute values of the terminals.

(2) The first-type terminal obtains a first access control parameter corresponding to a slice that is supported by or corresponding to the first-type terminal.

(3) The first-type terminal obtains a first access control parameter corresponding to identifier information of the first-type terminal, where the identifier information includes at least one of an identifier of the first-type terminal, an identifier group of the first-type terminal, a number segment of the first-type terminal, an identifier of a core network corresponding to the first-type terminal, and an identifier group of the core network corresponding to the first-type terminal.

(4) The first-type terminal obtains a first access control parameter corresponding to the type of the first-type terminal.

(5) The first-type terminal obtains a first access control parameter corresponding to the category of the first-type terminal.

(6) The first-type terminal obtains a first access control parameter corresponding to the use case of the first-type terminal.

It should be noted that the attribute of the first-type terminal, the slice that is supported by or corresponding to the first-type terminal, and the identifier information of the first-type terminal may be configured by a network side or stipulated in a protocol.

In an optional implementation of this embodiment of this application, the first-type terminal may obtain the first access control parameter by using at least one of the following configuration messages:
(1) a physical broadcast channel (Physical Broadcast Channel, PBCH) message;
(2) a master information block (Master Information Block, MIB) message;
(3) system information (System Information, SI) of a first system information block (System Information Block, SIB);
(4) a dedicated radio resource control (Radio Resource Control, RRC) message; and
(5) extended system information.

The first SIB is a system information block SIB corresponding to the second-type terminal.

Optionally, the extended system information in this embodiment of this application may further include at least one of the following:
(1) System information corresponding to the first-type terminal in a first SIB1, where the first SIB1 is a SIB in the first SIB, and the first SIB is a SIB corresponding to the second-type terminal. That is, the extended system information may be an additional SIB 1 system message that is extended based on the SIB1 to indicate that the first-type terminal is allowed to be supported or the first-type terminal is allowed to be accessed.
(2) System information corresponding to the first-type terminal in a SIBy, where y is an integer greater than 1, the SIBy is a SIB in the first SIB, and the first SIB is a SIB corresponding to the second-type terminal. In this example, the SIBy is an extended information element (IE) is added to an existing SIB, and the extended information element includes system information of the first-type terminal.
(3) System information corresponding to the first-type terminal in a SIBx, where x is an integer greater than 1, the SIBx is a SIB in a second SIB, and the second SIB is a SIB corresponding to the first-type terminal. In this example, THE SIBx is a SIB added based on an existing SIB.

Optionally, in this embodiment of this application, the first SIB 1 may be referred to as a SIB 1-extend, which is an extension based on a conventional SIB 1, and an additional SIB1 system message that is added to indicate that the second-type terminal is allowed to be supported or the second-type terminal is allowed to be accessed. In other words, the system information corresponding to the first-type terminal in the first SIB 1 is used to indicate any one of the following: system information supporting the first-type terminal; and system information allowing access or camping of the first-type terminal.

Further, the foregoing SIBx may be understood as a SIB other than a second SIB 1 in the newly added second SIB, and may be used to carry system information corresponding to the first-type terminal. In the system information, at least one of the following may be explicitly or implicitly indicated: whether the first-type terminal is supported in a first cell; and whether the first-type terminal is allowed to access or camp on the first cell. The first cell is a terminal in which the first-type terminal is currently located.

The foregoing SIBy may be understood as a SIB obtained through extension based on a SIB following the conventional first SIB 1, for example, a SIB obtained through based on a SIB in a conventional SIB2, SIB3, and SIB4....SIBn, and the SIBy may be referred to as a SIB2-light, a SIB3-light, a SIB4-light....and a SIBn-light. The SIBy includes system information required for a cell in which the first-type terminal is located. The system information may implicitly or explicitly at least one of the following: whether the first-type terminal is supported in the first cell; and whether the first-type terminal is allowed to access or camp on the first cell.

Optionally, the system information corresponding to the first-type terminal in the SIBx and the system information corresponding to the first-type terminal in the SIBy are used to indicate system information required by the first-type terminal to access or camp on a cell in which the first-type terminal is located.

In a specific use case, when the SIBx or the SIBy indicates the system information required by the first-type terminal to access or camp on the cell in which the first-type terminal is located, the terminal may be understood as that the first-type terminal is supported in the a first cell, or may be understood that the first-type terminal is allowed to access or camp on the first cell. In this case, an access or camping process may be performed. Certainly, in another optional implementation scenario, the SIBx or the SIBy may further include another indication identifier, which is used to indicate at least one of the following: whether the first-type terminal is supported in the first cell; and whether the first-type terminal is allowed to access or camp on the first cell.

It should be noted that the foregoing values of x and y may be indicated by using an information element (Information element, IE) of the conventional SIB 1 message.

In FIG. 2, the foregoing describes the access control method in this application from the terminal side, and the following describes the access control method in this application from the network side.

FIG. 3 is a second flowchart of an access control method according to an embodiment of this application. The method is applied to a network side device. As shown in FIG. 3, the method includes the following steps:

Step S302: Configure corresponding access control parameters for terminals of different types.

In this embodiment of this application, a manner of configuring corresponding access control parameters for terminals of different types in step S302 may further include: configuring a first access control parameter for a first-type terminal, and configuring a second access control parameter for a second-type terminal, where the first-type terminal and the second-type terminal are terminals of different types, and the first access control parameter is different from the second access control parameter.

It should be noted that the first-type terminal in this embodiment of this application is a light terminal, and the second-type terminal is a normal terminal. Further, the normal terminal may be understood as a non-light terminal or a terminal of a normal type defined in Rel15 or Rel16. The light terminal (light/lite UE, reduced capability UE, NR-light/Lite or RedCap UE for short) is mainly applicable to a wearable device (Wearable Device), an industry sensor terminal (Industry Sensor) in a factory environment, or a video surveillance device. This type of terminal is a device with a limited capability such as lower device complexity, a smaller device size, a weaker processing capability, or fewer features that can be supported.

Optionally, the configuring a first access control parameter for a first-type terminal in this embodiment of this application includes at least one of the following:
(1) The corresponding first access control parameter is configured for the first-type terminal according to an attribute of the first-type terminal, where the attribute of the first-type terminal includes at least one of a capability (capability) of the first-type terminal, a capability set (capability set) of the first-type terminal, a feature (feature/functionality) of the first-type terminal, a feature set (feature/functionality set) of the first-type terminal, a type of the first-type terminal, a category of the first-type terminal, a use case (use case) of the first-type terminal, and subscription information (subscription information) of the first-type terminal.

It should be noted that the foregoing type of the terminal generally corresponds to a category (type) defined in the protocol, and may be defined according to the feature set or the capability set or different data rates (for example, data rate), for example, cat. 1, cat.2,.... Different types (categories) may also be defined according to the feature set, the capability set, or the different data rates, or for different types, even if a same category may correspond to different types, such as a high-end terminal (high end UE) and a low-end terminal (low end UE). For different use cases (use case), different categories or different types may correspond to different use cases, or terminals of a same type or same category may be in different use cases (use case), for example, a wearable device (wearable device) applied to a personal service and an industry sensor (industrial sensor) applied to an industrial field. For low end UE, a low end wearable device and a low end industry sensor may also be distinguished. The foregoing subscription information is generally subscription information of UE, for example, corresponding subscription information of an operator in a SIM card, and includes at least one of the following: a type of a SIM card, a service type of a SIM card, SIM card tariff information, a priority of a SIM card, or a client level of an operator. Different initial access resources may be configured to correspond to different subscription information.

In a specific use case, the first-type terminal may be a terminal whose bandwidth capability is less than 700 MHz, or whose antenna quantity capability is less than 4/ equal to 2/equal to 1, or whose peak rate capability is less than 700 Mbps, or whose processing latency capability is less than a preset time, or whose supported carrier quantity capability is less than a preset value, or whose transmit power capability is less than a preset value. Certainly, the attribute of the first-type terminal is merely an example for description, and the attribute value of the first-type terminal may be correspondingly set or adjusted according to a requirement. That is, terminals of a same type may further select corresponding initial access resources according to attribute values of the terminals.

(2) The corresponding first access control parameter is configured for the first-type terminal according to a slice that is supported by or corresponding to the first-type terminal.

(3) Corresponding first access control information is configured for the first-type terminal according to identifier information of the first-type terminal, where the identifier information includes at least one of an identifier of the first-type terminal, an identifier group of the first-type terminal, a number segment of the first-type terminal, an identifier of a core network corresponding to the first-type terminal, and an identifier group of the core network corresponding to the first-type terminal.

(4) Corresponding first access control information is configured for the first-type terminal according to a type of the first-type terminal.

(5) Corresponding first access control information is configured for the first-type terminal according to a category of the first-type terminal.

(6) Corresponding first access control information is configured for the first-type terminal according to a use case of the first-type terminal.

Optionally, the access control parameter in this embodiment of this application includes at least one of the following:
(1) an access control type, for example, unified access control (Unified Access Control, UAC), access class barring (Access Class Barring, ACB), access barring (Access Barring, AB), and application specific congestion control for data communication (Application Specific Congestion Control for Data Communication, ACDC);
(2) public land mobile network information of access control;
(3) an access control probability parameter;
(4) an access control barring factor, for example, AC_BarringFactor;
(5) information about access control duration, for example, barTimer;
(6) access identifier information corresponding to access control, for example, an access ID;
(7) access category information corresponding to access control, for example, an access category;
(8) access control level information, for example, AC_Barring forSpecialAC;
(9) a radio resource control RRC connection establishment cause;
(10) an access attempt type; and
(11) event information corresponding to access control.

Optionally, in this embodiment of this application, the corresponding access control parameters may be configured for the terminals of different types by using the following configuration messages:
(1) a physical broadcast channel (Physical Broadcast Channel, PBCH) message;
(2) a master information block (Master Information Block, MIB) message;
(3) system information (System Information, SI) of a first system information block (System Information Block, SIB);
(4) a dedicated radio resource control (Radio Resource Control, RRC) message; and
(5) extended system information.

The first SIB is a SIB corresponding to the second-type terminal.

Optionally, the extended system information in this embodiment of this application may further include at least one of the following:
(1) System information corresponding to the first-type terminal in a first SIB1, where the first SIB1 is a SIB in the first SIB, and the first SIB is a SIB corresponding to the second-type terminal. That is, the extended system information may be an additional SIB 1 system message that is extended based on the SIB1 to indicate that the first-type terminal is allowed to be supported or the first-type terminal is allowed to be accessed.
(2) System information corresponding to the first-type terminal in a SIBy, where y is an integer greater than 1, the SIBy is a SIB in the first SIB, and the first SIB is a SIB corresponding to the second-type terminal. In this example, the SIBy is an extended information element (IE) is added to an existing SIB, and the extended information element includes system information of the first-type terminal.
(3) System information corresponding to the first-type terminal in a SIBx, where x is an integer greater than 1, the SIBx is a SIB in a second SIB, and the second SIB is a SIB corresponding to the first-type terminal. In this example, the SIBx is a SIB added based on an existing SIB.

Optionally, in this embodiment of this application, the first SIB1 may be referred to as a SIB 1-extend, which is an extension based on a conventional SIB 1, and an additional SIB1 system message that is added to indicate that the second-type terminal is allowed to be supported or the second-type terminal is allowed to be accessed. In other words, the system information corresponding to the first-type terminal in the first SIB 1 is used to indicate any one of the following: system information supporting the first-type terminal; and system information allowing access or camping of the first-type terminal.

Further, the foregoing SIBx may be understood as a SIB other than a second SIB 1 in the newly added second SIB, and may be used to carry system information corresponding to the first-type terminal. In the system information, at least one of the following may be explicitly or implicitly indicated: whether the first-type terminal is supported in a first cell; and whether the first-type terminal is allowed to access or camp on the first cell. The first cell is a terminal in which the first-type terminal is currently located.

The foregoing SIBy may be understood as a SIB obtained through extension based on a SIB following the conventional first SIB 1, for example, a SIB obtained through based on a SIB in a conventional SIB2, SIB3, and SIB4....SIBn, and the SIBy may be referred to as a SIB2-light, a SIB3-light, a SIB4-light....and a SIBn-light. The SIBy includes system information required for a cell in which the first-type terminal is located. The system information may implicitly or explicitly at least one of the following: whether the first-type terminal is supported in a first cell; and whether the first-type terminal is allowed to access or camp on the first cell.

Optionally, the system information corresponding to the first-type terminal in the SIBx and the system information corresponding to the first-type terminal in the SIBy are used to indicate system information required by the first-type terminal to access or camp on a cell in which the first-type terminal is located.

In a specific use case, when the SIBx or the SIBy indicates the system information required by the first-type terminal to access or camp on the cell in which the first-type terminal is located, the terminal may be understood as that the first-type terminal is supported in the a first cell, or may be understood that the first-type terminal is allowed to access or camp on the first cell. In this case, an access or camping process may be performed. Certainly, in another optional implementation scenario, the SIBx or the SIBy may further include another indication identifier, which is used to indicate at least one of the following: whether the first-type terminal is supported in the first cell; and whether the first-type terminal is allowed to access or camp on the first cell.

It should be noted that the foregoing values of x and y may be indicated by using an information element (Information element, IE) of the conventional SIB 1 message.

According to the access control method applied to the network side in this embodiment of this application, a network side device may configure corresponding access control parameters for terminals of different types, for example, configure a corresponding first access control parameter for a first-type terminal to perform access control, and configure a corresponding second access control parameter for a second-type terminal, so that terminals of different types can obtain corresponding access control parameters in an access control process, without affecting access of a terminal of another type after a large quantity of terminals of a specified type access. This resolves a problem in the prior art that all terminals of different types share a same set of access control parameters, affecting access control of a terminal of another type after a large quantity of terminals of a specified type access.

It should be noted that the access control method provided in the embodiments of this application may be performed by an access control apparatus, or a control module that is in the access control apparatus and that is configured to perform the access control method. In the embodiments of this application, that the access control apparatus performs and loads the access control method is used as an example to describe the access control apparatus provided in the embodiments of this application.

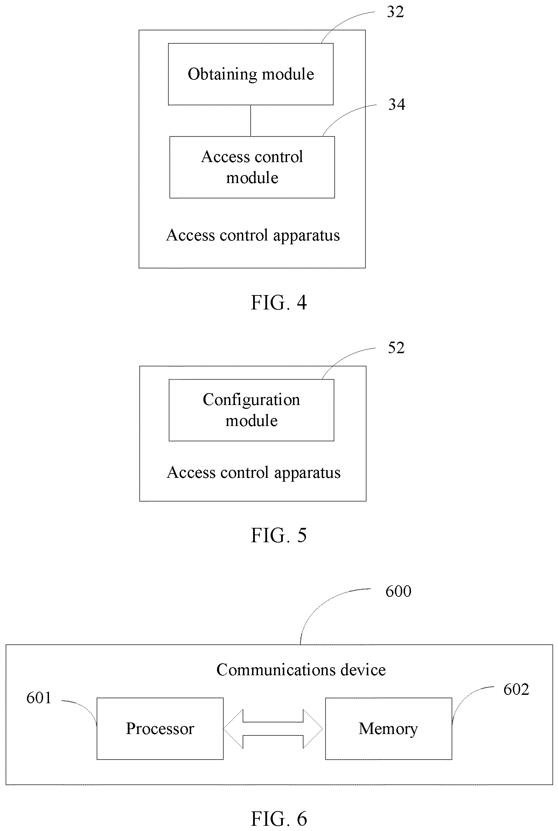

An embodiment of this application provides an access control apparatus, and the apparatus is applied to a first-type terminal. FIG. 4 is a first schematic structural diagram of an access control apparatus according to an embodiment of this application. As shown in FIG. 4, the apparatus includes:
an obtaining module 42, configured to obtain a first access control parameter, where the first access control parameter is different from a second access control parameter corresponding to a second-type terminal; and
an access control module 44, configured to perform access control according to the first access control parameter.

It should be noted that the first access control parameter in this embodiment of this application is configured by a network side or stipulated in a protocol. The first-type terminal in this embodiment of this application is a light terminal, and the second-type terminal is a normal terminal.

Optionally, the access control module 44 in this embodiment of this application may further include: a first access control unit, configured to perform a first target operation in a case that it is determined, according to the first access control parameter, that the first-type terminal is barred from accessing or is not allowed to access or is not supported by a cell in which the first-type terminal is located, where
the first target operation includes at least one of the following: not allowing camping on the cell; barring access to the cell or barring access to the cell within a preset time; not accessing the cell; not allowing an access attempt for the cell; and performing cell selection or reselection.

Optionally, the access control module 44 in this embodiment of this application may further include: a second access control unit, configured to perform a second target operation in a case that it is determined, according to the access control parameter, that the first-type terminal is allowed to access or is not barred from accessing or is supported by a cell in which the first-type terminal is located, where
the second target operation includes at least one of the following: allowing camping on the cell; not barring access to the cell; allowing access to the cell; performing an access attempt for the cell; and not performing cell selection or reselection.

Optionally, the obtaining module 42 in this embodiment of this application may further include at least one of the following:
(1) a first obtaining unit, configured to obtain a first access control parameter corresponding to an attribute of the first-type terminal, where the attribute of the first-type terminal includes at least one of a capability of the first-type terminal, a capability set of the first-type terminal, a feature of the first-type terminal, a feature set of the first-type terminal, a type of the first-type terminal, a category of the first-type terminal, a use case of the first-type terminal, and subscription information of the first-type terminal;
(2) a second obtaining unit, configured to obtain a first access control parameter corresponding to a slice that is supported by or corresponding to the first-type terminal;
(3) a third obtaining unit, configured to obtain a first access control parameter corresponding to identifier information of the first-type terminal, where the identifier information includes at least one of an identifier of the first-type terminal, an identifier group of the first-type terminal, a number segment of the first-type terminal, an identifier of a core network corresponding to the first-type terminal, and an identifier group of the core network corresponding to the first-type terminal;
(4) a fourth obtaining unit, configured to obtain a first access control parameter corresponding to the type of the first-type terminal;
(5) a fifth obtaining unit, configured to obtain a first access control parameter corresponding to the category of the first-type terminal; and
(6) a sixth obtaining unit, configured to obtain a first access control parameter corresponding to the use case of the first-type terminal.

It should be noted that the attribute of the first-type terminal, the slice that is supported by or corresponding to the first-type terminal, and the identifier information of the first-type terminal in this embodiment of this application are configured by a network side or stipulated in a protocol.

Optionally, the first access control parameter in this embodiment of this application includes at least one of the following: an access control type, public land mobile network information of access control, an access control probability parameter, an access control barring factor, information about access control duration, access identifier information corresponding to access control, access category information corresponding to access control, access control level information, a radio resource control RRC connection establishment cause, an access attempt type, and event information corresponding to access control.

Optionally, the obtaining module 42 in this embodiment of this application may obtain the first access control parameter by using at least one of the following configuration messages: a physical broadcast channel PBCH message, a master information block MIB message, a first system information block SIB, extended system information, and a dedicated radio resource control RRC message.

It should be noted that the first SIB is a SIB corresponding to the second-type terminal.

Optionally, the extended system information in this embodiment of this application includes at least one of the following:
(1) system information corresponding to the first-type terminal in a first SIB 1, where the first SIB1 is a SIB in the first SIB, and the first SIB is a SIB corresponding to the second-type terminal;
(2) system information corresponding to the first-type terminal in a SIBx, where x is an integer greater than 1, the SIBx is a SIB in a second SIB, and the second SIB is a SIB corresponding to the first-type terminal; and
(3) system information corresponding to the first-type terminal in a SIBy, where y is an integer greater than 1, the SIBy is a SIB in the first SIB, and the first SIB is a SIB corresponding to the second-type terminal.

Optionally, the system information corresponding to the first-type terminal in the first SIB1 is used to indicate any one of the following: system information supporting the first-type terminal; system information supporting access or camping of the first-type terminal; and system information allowing access or camping of the first-type terminal.

Optionally, the system information corresponding to the first-type terminal in the SIBx and the system information corresponding to the first-type terminal in the SIBy are used to indicate system information required by the first-type terminal to access or camp on a cell in which the first-type terminal is located.

According to the foregoing access control apparatus applied to the first-type terminal, a corresponding first access control parameter may be obtained to perform access control, where the first access control parameter is different from a second access control parameter corresponding to a second-type terminal, that is, terminals of different types may obtain corresponding access control parameters. This resolves a problem in the prior art that all terminals of different types share a same set of access control parameters, affecting access control of a terminal of another type after a large quantity of terminals of a specified type access.

The foregoing describes the access control process in the embodiments of this application from the first-type terminal side, and the following describes the access control process in the embodiments of this application from the network side.

An embodiment of this application provides an access control apparatus, and the apparatus is applied to a network side device. FIG. 5 is a second schematic structural diagram of an access control apparatus according to an embodiment of this application. As shown in FIG. 5, the apparatus includes:
a configuration module 52, configured to configure corresponding access control parameters for terminals of different types.

Optionally, the configuration module 52 in this embodiment of this application may further include: a configuration unit, configured to: configure a first access control parameter for a first-type terminal, and configure a second access control parameter for a second-type terminal, where the first-type terminal and the second-type terminal are terminals of different types, and the first access control parameter is different from the second access control parameter.

The configuration unit may further include at least one of the following:
(1) a first configuration subunit, configured to configure the corresponding first access control parameter for the first-type terminal according to an attribute of the first-type terminal, where the attribute of the first-type terminal includes at least one of a capability of the first-type terminal, a capability set of the first-type terminal, a feature of the first-type terminal, and a feature set of the first-type terminal;
(2) a second configuration subunit, configured to configure the corresponding first access control parameter for the first-type terminal according to a slice that is supported by or corresponding to the first-type terminal;
(3) a third configuration subunit, configured to configure corresponding first access control information for the first-type terminal according to identifier information of the first-type terminal, where the identifier information includes at least one of an identifier of the first-type terminal, an identifier group of the first-type terminal, a number segment of the first-type terminal, an identifier of a core network corresponding to the first-type terminal, and an identifier group of the core network corresponding to the first-type terminal;
(4) a fourth configuration subunit, configured to configure corresponding first access control information for the first-type terminal according to a type of the first-type terminal;
(5) a fifth configuration subunit, configured to configure corresponding first access control information for the first-type terminal according to a category of the first-type terminal; and
(6) a sixth configuration subunit, configured to configure corresponding first access control information for the first-type terminal according to a use case of the first-type terminal.

Optionally, the access control parameter in this embodiment of this application includes at least one of the following: an access control type, public land mobile network information of access control, an access control probability parameter, an access control barring factor, information about access control duration, access identifier information corresponding to access control, access category information corresponding to access control, access control level information, an RRC connection establishment cause, an access attempt type, and event information corresponding to access control.

Optionally, the configuration module 52 in this embodiment of this application may configure the corresponding access control parameters for the terminals of different types by using the following configuration messages: a physical broadcast channel PBCH message, a master information block MIB message, a first system information block SIB, extended system information, and a dedicated radio resource control RRC message.

It should be noted that the first SIB is a SIB corresponding to the second-type terminal.

Optionally, the extended system information in the first SIB in this embodiment of this application includes at least one of the following:
(1) system information corresponding to the first-type terminal in a first SIB 1, where the first SIB1 is a SIB in the first SIB, and the first SIB is a SIB corresponding to the second-type terminal;
(2) system information corresponding to the first-type terminal in a SIBx, where x is an integer greater than 1, the SIBx is a SIB in a second SIB, and the second SIB is a SIB corresponding to the first-type terminal; and
(3) system information corresponding to the first-type terminal in a SIBy, where y is an integer greater than 1, the SIBy is a SIB in the first SIB, and the first SIB is a SIB corresponding to the second-type terminal.

Optionally, the system information corresponding to the first-type terminal in the first SIB 1 in this embodiment of this application is used to indicate any one of the following: system information supporting the first-type terminal; system information supporting camping or access of the first-type terminal; and system information allowing access or camping of the first-type terminal.

Optionally, the system information corresponding to the first-type terminal in the SIBx and the system information corresponding to the first-type terminal in the SIBy in this embodiment of this application are used to indicate system information required by the first-type terminal to access or camp on a cell in which the first-type terminal is located.

Optionally, the first-type terminal in this embodiment of this application is a light terminal, and the second-type terminal in this embodiment of this application is a normal terminal.

According to the access control apparatus applied to the network side device in this embodiment of this application, corresponding access control parameters may be configured for terminals of different types, for example, a corresponding first access control parameter is configured for a first-type terminal to perform access control, and a corresponding second access control parameter is configured for a second-type terminal, so that terminals of different types can obtain corresponding access control parameters in an access control process, without affecting access of a terminal of another type after a large quantity of terminals of a specified type access. This resolves a problem in the prior art that all terminals of different types share a same set of access control parameters, affecting access control of a terminal of another type after a large quantity of terminals of a specified type access.

The access control apparatus in this embodiment of this application may be an apparatus, or may be a component, an integrated circuit, or a chip in a terminal. The apparatus may be a mobile terminal, or a non-mobile terminal. For example, the mobile device may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The access control apparatus in this embodiment of this application may be an apparatus with an operating system. The operating system may be an Android (Android) operating system, an iOS operating system, or another possible operating system. This is not specifically limited in the embodiments of this application.

The access control apparatus provided in this embodiment of this application can implement the processes implemented in the method embodiments in FIG. 2 to FIG. 3, and achieve a same technical effect. To avoid repetition, details are not described herein again.

Optionally, as shown in FIG. 6, an embodiment of this application further provides a communications device 600, including a processor 601, a memory 602, and a program or an instruction that is stored in the memory 602 and that can be run on the processor 601. For example, when the communications device 600 is a terminal, the program or the instruction is executed by the processor 701 to implement the processes of the foregoing access control method embodiment, and a same technical effect can be achieved. When the communications device 600 is a network side device, the program or the instruction is executed by the processor 701 to implement the processes of the foregoing access control method embodiment, and a same technical effect can be achieved. To avoid repetition, details are not described herein again.

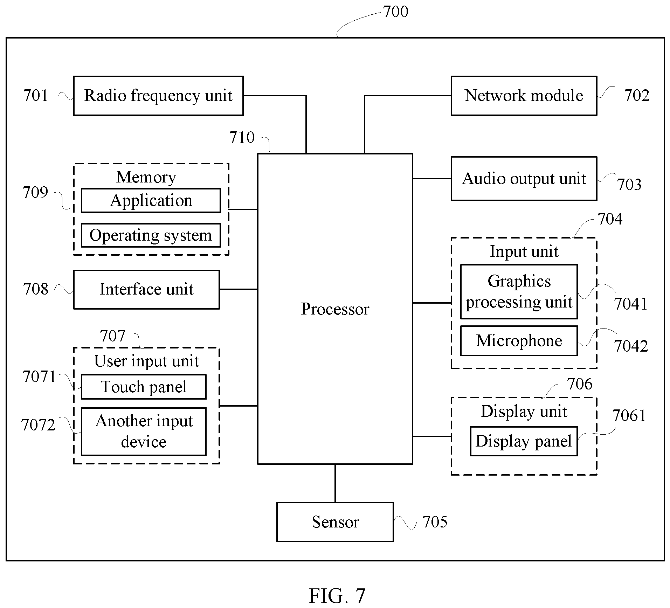

FIG. 7 is a schematic structural diagram of hardware of a terminal according to an embodiment of this application.

A terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

A person skilled in the art can understand that the terminal 700 may further include a power supply (such as a battery) that supplies power to each component. The power supply may be logically connected to the processor 710 by using a power supply management system, to implement functions such as charging and discharging management, and power consumption management by using the power supply management system. The terminal structure shown in FIG. 7 constitutes no limitation on the terminal, and the terminal may include more or fewer components than those shown in FIG. 7, or combine some components, or have different component arrangements. Details are not described herein.

It should be understood that, in this embodiment of this application, the input unit 704 may include a graphics processing unit (Graphics Processing Unit, GPU) 7041 and a microphone 7042, and the graphics processing unit 7041 processes image data of a still picture or a video obtained by an image capture apparatus (such as a camera) in a video capture mode or an image capture mode. The display unit 706 may include a display panel 7061. Optionally, the display panel 7061 may be configured in a form such as a liquid crystal display or an organic light-emitting diode. The user input unit 707 includes a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a functional button (such as a volume control button or a power on/off button), a trackball, a mouse, and a joystick. Details are not described herein.

In this embodiment of this application, the radio frequency unit 701 receives downlink data from a network side device and then sends the downlink data to the processor 710 for processing; and sends uplink data to the network side device. Usually, the radio frequency unit 701 includes but is not limited to an antenna, at least one amplifier, a transceiver, a coupler, a low noise amplifier, a duplexer, and the like.

The memory 709 may be configured to store a software program or an instruction and various data. The memory 709 may mainly include a program or instruction storage area and a data storage area. The program or instruction storage area may store an operating system, and an application or an instruction required by at least one function (for example, a sound playing function or an image playing function). In addition, the memory 709 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 710 may include one or more processing units. Optionally, an application processor and a modem processor may be integrated into the processor 710. The application processor mainly processes an operating system, a user interface, an application, an instruction, or the like. The modem processor mainly processes wireless communications, for example, a baseband processor. It can be understood that, alternatively, the modem processor may not be integrated into the processor 710.

The radio frequency unit 701 is configured to obtain a first access control parameter, where the first access control parameter is different from a second access control parameter corresponding to a second-type terminal.

The processor 710 is configured to perform access control according to the first access control parameter.

In this embodiment of this application, a corresponding first access control parameter may be obtained to perform access control, where the first access control parameter is different from a second access control parameter corresponding to a second-type terminal, that is, terminals of different types may obtain corresponding access control parameters. This resolves a problem in the prior art that all terminals of different types share a same set of access control parameters, affecting access control of a terminal of another type after a large quantity of terminals of a specified type access.

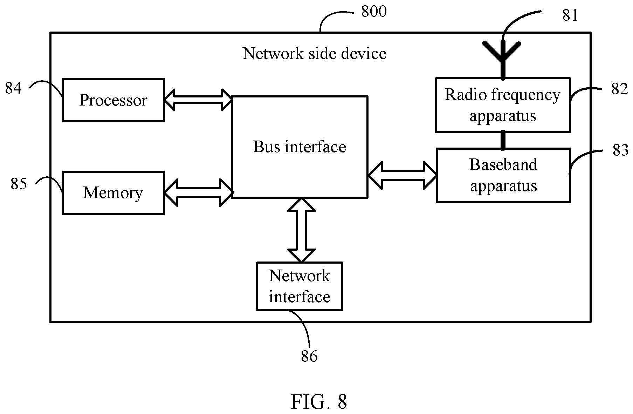

Specifically, an embodiment of this application further provides a network side device. As shown in FIG. 8, a network device 800 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes information that needs to be sent, and sends processed information to the radio frequency apparatus 82. The radio frequency apparatus 82 processes the received information, and sends processed information by using the antenna 81.

The frequency band processing apparatus may be located in the baseband apparatus 83. The method performed by the network side device in the foregoing embodiment may be implemented in the baseband apparatus 83. The baseband apparatus 83 includes a processor 84 and a memory 85.

The baseband apparatus 83 may include, for example, at least one baseband board, where a plurality of chips are disposed on the baseband board. As shown in FIG. 8, one chip is, for example, the processor 84, which is connected to the memory 85, so as to invoke a program in the memory 85 to perform operations of the network device shown in the foregoing method embodiment.

The baseband apparatus 83 may further include a network interface 86, configured to exchange information with the radio frequency apparatus 82. For example, the interface is a common public radio interface (common public radio interface, CPRI).

Specifically, the network side device in this embodiment of the present invention further includes an instruction or a program that is stored in the memory 85 and that can be run on the processor 84. The processor 84 invokes the instruction or the program in the memory 85 to perform the method performed by the modules shown in FIG. 5, and a same technical effect is achieved. To avoid repetition, details are not described herein again.

An embodiment of this application further provides a readable storage medium. The readable storage medium stores a program or an instruction, and when the program or the instruction is executed by a processor, the processes of the foregoing access control method embodiment are implemented and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction of a network side device to implement the processes of the foregoing access control method embodiment and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer software product. The computer software product is stored in a non-volatile storage medium, and the computer software product is configured to be executed by at least one processor to implement the processes of the foregoing access control method embodiment, and a same technical effect can be achieved. To avoid repetition, details are not described herein again.

It can be understood that the embodiments described in the present disclosure may be implemented by hardware, software, firmware, middleware, microcode, or a combination thereof. For hardware implementation, a module, a unit, a submodule, a subunit, or the like may be implemented in one or more application specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general purpose processors, controllers, microcontrollers, microprocessors, or other electronic units or a combination thereof used to perform the functions in this application.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An access control method, comprising:
obtaining, by a first-type terminal, a first access control parameter, wherein the first access control parameter is different from a second access control parameter corresponding to a second-type terminal; and
performing, by the first-type terminal, access control according to the first access control parameter.

2. The method according to claim 1, wherein the performing access control according to the first access control parameter comprises:
performing a first target operation in a case that it is determined, according to the first access control parameter, that the first-type terminal is barred from accessing or is not allowed to access or is not supported by a cell in which the first-type terminal is located, wherein
the first target operation comprises at least one of the following: not allowing camping on the cell; barring access to the cell or barring access to the cell within a preset time; not accessing the cell; not allowing an access attempt for the cell; and performing cell selection or reselection.

3. The method according to claim 1, wherein the performing, by the first-type terminal, access control according to the first access control parameter comprises:
performing a second target operation in a case that it is determined, according to the access control parameter, that the first-type terminal is allowed to access or is not barred from accessing or is supported by a cell in which the first-type terminal is located, wherein
the second target operation comprises at least one of the following: allowing camping on the cell; not barring access to the cell; allowing access to the cell; performing an access attempt for the cell; and not performing cell selection or reselection.

4. The method according to claim 1, wherein the obtaining, by a first-type terminal, a first access control parameter comprises at least one of the following:
obtaining, by the first-type terminal, a first access control parameter corresponding to an attribute of the first-type terminal, wherein the attribute of the first-type terminal comprises at least one of a capability of the first-type terminal, a capability set of the first-type terminal, a feature of the first-type terminal, a feature set of the first-type terminal, a type of the first-type terminal, a category of the first-type terminal, a use case of the first-type terminal, and subscription information of the first-type terminal;
obtaining, by the first-type terminal, a first access control parameter corresponding to a slice that is supported by or corresponding to the first-type terminal;
obtaining, by the first-type terminal, a first access control parameter corresponding to identifier information of the first-type terminal, wherein the identifier information comprises at least one of an identifier of the first-type terminal, an identifier group of the first-type terminal, a number segment of the first-type terminal, an identifier of a core network corresponding to the first-type terminal, and an identifier group of the core network corresponding to the first-type terminal;
obtaining, by the first-type terminal, a first access control parameter corresponding to the type of the first-type terminal;
obtaining, by the first-type terminal, a first access control parameter corresponding to the category of the first-type terminal; and
obtaining, by the first-type terminal, a first access control parameter corresponding to the use case of the first-type terminal.

5. The method according to claim 4, wherein the attribute of the first-type terminal, the slice that is supported by or corresponding to the first-type terminal, and the identifier information of the first-type terminal are configured by a network side or stipulated in a protocol.

6. The method according to claim 1, wherein the first access control parameter comprises at least one of the following:
an access control type, public land mobile network information of access control, an access control probability parameter, an access control barring factor, information about access control duration, access identifier information corresponding to access control, access category information corresponding to access control, access control level information, a radio resource control RRC connection establishment cause, an access attempt type, and event information corresponding to access control.

7. The method according to claim 1, wherein the first-type terminal obtains the first access control parameter by using at least one of the following configuration messages:
a physical broadcast channel PBCH message, a master information block MIB message, a first system information block SIB, extended system information, and a dedicated radio resource control RRC message, wherein
the first SIB is a SIB corresponding to the second-type terminal.

8. The method according to claim 7, wherein the extended system information comprises at least one of the following:
system information corresponding to the first-type terminal in a first SIB 1, wherein the first SIB1 is a SIB in the first SIB, and the first SIB is a SIB corresponding to the second-type terminal;
system information corresponding to the first-type terminal in a SIBx, wherein x is an integer greater than 1, the SIBx is a SIB in a second SIB, and the second SIB is a SIB corresponding to the first-type terminal; and
system information corresponding to the first-type terminal in a SIBy, wherein y is an integer greater than 1, the SIBy is a SIB in the first SIB, and the first SIB is a SIB corresponding to the second-type terminal.

9. The method according to claim 7, wherein the system information corresponding to the first-type terminal in the first SIB1 is used to indicate any one of the following:
system information supporting the first-type terminal; and
system information allowing access or camping of the first-type terminal.

10. The method according to claim 8, wherein the system information corresponding to the first-type terminal in the SIBx and the system information corresponding to the first-type terminal in the SIBy are used to indicate system information required by the first-type terminal to access or camp on a cell in which the first-type terminal is located.

11. The method according to claim 1, wherein the first access control parameter is configured by a network side or stipulated in a protocol.

12. The method according to claim 1, wherein the first-type terminal is a light terminal, and the second-type terminal is a normal terminal.

13. An access control method, applied to a network side device and comprising:
configuring corresponding access control parameters for terminals of different types.

14. The method according to claim 13, wherein the configuring corresponding access control parameters for terminals of different types comprises:
configuring a first access control parameter for a first-type terminal, and configuring a second access control parameter for a second-type terminal, wherein the first-type terminal and the second-type terminal are terminals of different types, and the first access control parameter is different from the second access control parameter.

15. The method according to claim 14, wherein the configuring a first access control parameter for a first-type terminal comprises at least one of the following:
configuring the corresponding first access control parameter for the first-type terminal according to an attribute of the first-type terminal, wherein the attribute of the first-type terminal comprises at least one of a capability of the first-type terminal, a capability set of the first-type terminal, a feature of the first-type terminal, and a feature set of the first-type terminal;
configuring the corresponding first access control parameter for the first-type terminal according to a slice that is supported by or corresponding to the first-type terminal;
configuring corresponding first access control information for the first-type terminal according to identifier information of the first-type terminal, wherein the identifier information comprises at least one of an identifier of the first-type terminal, an identifier group of the first-type terminal, a number segment of the first-type terminal, an identifier of a core network corresponding to the first-type terminal, and an identifier group of the core network corresponding to the first-type terminal;
configuring corresponding first access control information for the first-type terminal according to a type of the first-type terminal;
configuring corresponding first access control information for the first-type terminal according to a category of the first-type terminal; and
configuring corresponding first access control information for the first-type terminal according to a use case of the first-type terminal.

16. The method according to claim 13, wherein the access control parameter comprises at least one of the following:
an access control type, public land mobile network information of access control, an access control probability parameter, an access control barring factor, information about access control duration, access identifier information corresponding to access control, access category information corresponding to access control, access control level information, an RRC connection establishment cause, an access attempt type, and event information corresponding to access control.

17. The method according to claim 14, wherein the corresponding access control parameters are configured for the terminals of different types by using the following configuration messages:
a physical broadcast channel PBCH message, a master information block MIB message, a first system information block SIB, extended system information, and a dedicated radio resource control RRC message, wherein
the first SIB is a SIB corresponding to the second-type terminal.

18. The method according to claim 17, wherein the extended system information in the first SIB comprises at least one of the following:
system information corresponding to the first-type terminal in a first SIB 1, wherein the first SIB1 is a SIB in the first SIB, and the first SIB is a SIB corresponding to the second-type terminal;
system information corresponding to the first-type terminal in a SIBx, wherein x is an integer greater than 1, the SIBx is a SIB in a second SIB, and the second SIB is a SIB corresponding to the first-type terminal; and
system information corresponding to the first-type terminal in a SIBy, wherein y is an integer greater than 1, the SIBy is a SIB in the first SIB, and the first SIB is a SIB corresponding to the second-type terminal.

19. The method according to claim 17, wherein the system information corresponding to the first-type terminal in the first SIB 1 is used to indicate any one of the following:
system information supporting the first-type terminal; and
system information allowing access or camping of the first-type terminal.

20. The method according to claim 18, wherein the system information corresponding to the first-type terminal in the SIBx and the system information corresponding to the first-type terminal in the SIBy are used to indicate system information required by the first-type terminal to access or camp on a cell in which the first-type terminal is located.

21. The method according to claim 14, wherein the first-type terminal is a light terminal, and the second-type terminal is a normal terminal.

22. An access control apparatus, applied to a first-type terminal and comprising:
an obtaining module, configured to obtain a first access control parameter, wherein the first access control parameter is different from a second access control parameter corresponding to a second-type terminal; and
an access control module, configured to perform access control according to the first access control parameter.

23. The apparatus according to claim 22, wherein the access control module comprises:
a first access control unit, configured to perform a first target operation in a case that it is determined, according to the first access control parameter, that the first-type terminal is barred from accessing or is not allowed to access or is not supported by a cell in which the first-type terminal is located, wherein
the first target operation comprises at least one of the following: not allowing camping on the cell; barring access to the cell or barring access to the cell within a preset time; not accessing the cell; not allowing an access attempt for the cell; and performing cell selection or reselection.

24. The apparatus according to claim 22, wherein the access control module comprises:
a second access control unit, configured to perform a second target operation in a case that it is determined, according to the access control parameter, that the first-type terminal is allowed to access or is not barred from accessing or is supported by a cell in which the first-type terminal is located, wherein
the second target operation comprises at least one of the following: allowing camping on the cell; not barring access to the cell; allowing access to the cell; performing an access attempt for the cell; and not performing cell selection or reselection.

25. The apparatus according to claim 22, wherein the obtaining module comprises at least one of the following:
a first obtaining unit, configured to obtain a first access control parameter corresponding to an attribute of the first-type terminal, wherein the attribute of the first-type terminal comprises at least one of a capability of the first-type terminal, a capability set of the first-type terminal, a feature of the first-type terminal, a feature set of the first-type terminal, a type of the first-type terminal, a category of the first-type terminal, a use case of the first-type terminal, and subscription information of the first-type terminal;
a second obtaining unit, configured to obtain a first access control parameter corresponding to a slice that is supported by or corresponding to the first-type terminal;
a third obtaining unit, configured to obtain a first access control parameter corresponding to identifier information of the first-type terminal, wherein the identifier information comprises at least one of an identifier of the first-type terminal, an identifier group of the first-type terminal, a number segment of the first-type terminal, an identifier of a core network corresponding to the first-type terminal, and an identifier group of the core network corresponding to the first-type terminal;
a fourth obtaining unit, configured to obtain a first access control parameter corresponding to the type of the first-type terminal;
a fifth obtaining unit, configured to obtain a first access control parameter corresponding to the category of the first-type terminal; and
a sixth obtaining unit, configured to obtain a first access control parameter corresponding to the use case of the first-type terminal.

26. The apparatus according to claim 25, wherein the attribute of the first-type terminal, the slice that is supported by or corresponding to the first-type terminal, and the identifier information of the first-type terminal are configured by a network side or stipulated in a protocol.

27. The apparatus according to claim 22, wherein the first access control parameter comprises at least one of the following:
an access control type, public land mobile network information of access control, an access control probability parameter, an access control barring factor, information about access control duration, access identifier information corresponding to access control, access category information corresponding to access control, access control level information, a radio resource control RRC connection establishment cause, an access attempt type, and event information corresponding to access control.

28. The apparatus according to claim 22, wherein the obtaining module obtains the first access control parameter by using at least one of the following configuration messages:
a physical broadcast channel PBCH message, a master information block MIB message, a first system information block SIB, extended system information, and a dedicated radio resource control RRC message, wherein
the first SIB is a SIB corresponding to the second-type terminal.

29. The apparatus according to claim 28, wherein the extended system information comprises at least one of the following:
system information corresponding to the first-type terminal in a first SIB1, wherein the first SIB1 is a SIB in the first SIB, and the first SIB is a SIB corresponding to the second-type terminal;
system information corresponding to the first-type terminal in a SIBx, wherein x is an integer greater than 1, the SIBx is a SIB in a second SIB, and the second SIB is a SIB corresponding to the first-type terminal; and
system information corresponding to the first-type terminal in a SIBy, wherein y is an integer greater than 1, the SIBy is a SIB in the first SIB, and the first SIB is a SIB corresponding to the second-type terminal.

30. The apparatus according to claim 28, wherein the system information corresponding to the first-type terminal in the first SIB1 is used to indicate any one of the following:
system information supporting the first-type terminal; and
system information allowing access or camping of the first-type terminal.

31. The apparatus according to claim 29, wherein the system information corresponding to the first-type terminal in the SIBx and the system information corresponding to the first-type terminal in the SIBy are used to indicate system information required by the first-type terminal to access or camp on a cell in which the first-type terminal is located.

32. The apparatus according to claim 22, wherein the first access control parameter is configured by a network side or stipulated in a protocol.

33. The apparatus according to claim 22, wherein the first-type terminal is a light terminal, and the second-type terminal is a normal terminal.

34. An access control apparatus, applied to a network side device and comprising:
a configuration module, configured to configure corresponding access control parameters for terminals of different types.

35. The apparatus according to claim 34, wherein the configuration module comprises:
a configuration unit, configured to: configure a first access control parameter for a first-type terminal, and configure a second access control parameter for a second-type terminal, wherein the first-type terminal and the second-type terminal are terminals of different types, and the first access control parameter is different from the second access control parameter.

36. The apparatus according to claim 35, wherein the configuration unit comprises at least one of the following:
a first configuration subunit, configured to configure the corresponding first access control parameter for the first-type terminal according to an attribute of the first-type terminal, wherein the attribute of the first-type terminal comprises at least one of a capability of the first-type terminal, a capability set of the first-type terminal, a feature of the first-type terminal, and a feature set of the first-type terminal;
a second configuration subunit, configured to configure the corresponding first access control parameter for the first-type terminal according to a slice that is supported by or corresponding to the first-type terminal;
a third configuration subunit, configured to configure corresponding first access control information for the first-type terminal according to identifier information of the first-type terminal, wherein the identifier information comprises at least one of an identifier of the first-type terminal, an identifier group of the first-type terminal, a number segment of the first-type terminal, an identifier of a core network corresponding to the first-type terminal, and an identifier group of the core network corresponding to the first-type terminal;
a fourth configuration subunit, configured to configure corresponding first access control information for the first-type terminal according to a type of the first-type terminal;
a fifth configuration subunit, configured to configure corresponding first access control information for the first-type terminal according to a category of the first-type terminal; and
a sixth configuration subunit, configured to configure corresponding first access control information for the first-type terminal according to a use case of the first-type terminal.

37. The apparatus according to claim 34, wherein the access control parameter comprises at least one of the following:
an access control type, public land mobile network information of access control, an access control probability parameter, an access control barring factor, information about access control duration, access identifier information corresponding to access control, access category information corresponding to access control, access control level information, an RRC connection establishment cause, an access attempt type, and event information corresponding to access control.

38. The apparatus according to claim 35, wherein the configuration module configures the corresponding access control parameters for the terminals of different types by using the following configuration messages:
a physical broadcast channel PBCH message, a master information block MIB message, a first system information block SIB, extended system information, and a dedicated radio resource control RRC message, wherein
the first SIB is a SIB corresponding to the second-type terminal.

39. The apparatus according to claim 38, wherein the extended system information in the first SIB comprises at least one of the following:
system information corresponding to the first-type terminal in a first SIB 1, wherein the first SIB1 is a SIB in the first SIB, and the first SIB is a SIB corresponding to the second-type terminal;
system information corresponding to the first-type terminal in a SIBx, wherein x is an integer greater than 1, the SIBx is a SIB in a second SIB, and the second SIB is a SIB corresponding to the first-type terminal; and
system information corresponding to the first-type terminal in a SIBy, wherein y is an integer greater than 1, the SIBy is a SIB in the first SIB, and the first SIB is a SIB corresponding to the second-type terminal.

40. The apparatus according to claim 38, wherein the system information corresponding to the first-type terminal in the first SIB1 is used to indicate any one of the following:
system information supporting the first-type terminal; and
system information allowing access or camping of the first-type terminal.

41. The apparatus according to claim 39, wherein the system information corresponding to the first-type terminal in the SIBx and the system information corresponding to the first-type terminal in the SIBy are used to indicate system information required by the first-type terminal to access or camp on a cell in which the first-type terminal is located.

42. The apparatus according to claim 35, wherein the first-type terminal is a light terminal, and the second-type terminal is a normal terminal.

43. A terminal, comprising a processor, a memory, and a program or an instruction that is stored in the memory and that can be run on the processor, wherein when the program or the instruction is executed by the processor, the steps of the access control method according to any one of claims 1 to 12 are implemented.

44. A network side device, comprising a processor, a memory, and a program or an instruction that is stored in the memory and that can be run on the processor, wherein when the program or the instruction is executed by the processor, the steps of the access control method according to any one of claims 13 to 21 are implemented.

45. A readable storage medium, wherein the readable storage medium stores a program or an instruction, and when the program or the instruction is executed by a processor, the steps of the access control method according to any one of claims 1 to 12 are implemented, or the steps of the access control method according to any one of claims 13 to 21 are implemented.

46. A chip, comprising a processor and a communications interface, wherein the communications interface is coupled to the processor, and the processor is configured to run a program or an instruction to implement the access control method according to any one of claims 1 to 12 or the access control method according to any one of claims 13 to 21.

47. A computer program product, wherein the computer program product is stored in a non-volatile storage medium, and the computer program product is executed by at least one processor to implement the access control method according to any one of claims 1 to 12 or the access control method according to any one of claims 13 to 21.
